Europäisches Patentamt

European Patent Office

Office européen des brevets

(11) Numéro de publication: **0 084 338**
**B1**

## FASCICULE DE BREVET EUROPEEN

(45) Date de publication du fascicule du brevet: **04.07.90**

(21) Numéro de dépôt: **83100161.5**

(22) Date de dépôt: **11.01.83**

(51) Int. Cl.⁵: **H 01 M 2/10**

(54) Boîtier pour batterie de générateurs électrochimiques.

(30) Priorité: **14.01.82 FR 8200528**

(43) Date de publication de la demande:
**27.07.83 Bulletin 83/30**

(45) Mention de la délivrance du brevet:
**04.07.90 Bulletin 90/27**

(84) Etats contractants désignés:
**AT BE CH DE FR GB IT LI LU NL SE**

(56) Documents cités:
**FR-A-2 254 885**
**FR-A-2 369 693**

(73) Titulaire: **Société Anonyme dite SAFT**
**156, avenue de Metz**
**F-93230 Romainville (FR)**

(72) Inventeur: **Adam, Michel**
**58, Avenue Foch**
**F-93460 Gournay (FR)**

(74) Mandataire: **Weinmiller, Jürgen et al**
**Lennéstrasse 9 Postfach 24**
**D-8133 Feldafing (DE)**

Courier Press, Leamington Spa, England.

EP 0 084 338 B1

# Description

La présente invention concerne un boîtier pour batterie de générateurs électrochimiques primaires ou secondaires selon le préambule de la revendication 1. Un tel boîtier est connu, par exemple à partir du document US-A-4.123.598.

Il est indispensable de maintenir entre deux générateurs voisins une distance d'isolement suffisante. Ainsi, on connaît par le brevet français n° 2 369 693 des boîtiers comportant un bac fermé par un couvercle et présentant des compartiments internes séparant les générateurs les uns des autres; il est clair qu'il faut prévoir un type de boîtier pour chaque batterie comportant un nombre donné de générateurs. A ce sujet, ledit document US-A propose d'interposer des cales entre deux générateurs, si la longueur d'un compartiment excède celle de l'ensemble des générateurs à y loger.

La présente invention a pour but de réaliser un boîtier utilisable pour des générateurs munis ou non d'une gaine isolante et permettant de s'affranchir de nombreux outillages, ainsi que des accessoires de solidarisation du genre colle, lien, ruban, etc... et ceci, quel que soit le nombre de générateurs.

Ce but est atteint selon l'invention par le boîtier tel qu'il est défini dans la revendication 1. En ce qui concerne des caractéristiques d'une mise en oeuvre préférée de l'invention, référence est faite aux revendications secondaires.

L'invention sera décrite ci-après, à titre illustratif mais nullement limitatif, à l'aide de quelques exemples de réalisation dans lesquels on a choisi $n = 2$.

Dans le dessin annexé:

la figure 1 illustre en perspective un module à deux cavités,

la figure 2 illustre en perspective un module à trois cavités,

la figure 3 montre en coupe partielle transversale un boîtier selon l'invention,

la figure 4 montre schématiquement d'en face un boîtier selon l'invention contenant cinq générateurs en une rangée,

la figure 5 montre schématiquement d'en face un autre boîtier selon l'invention contenant six générateurs en une rangée,

la figure 6 montre en perspective un boîtier selon l'invention susceptible de contenir deux rangées de générateurs.

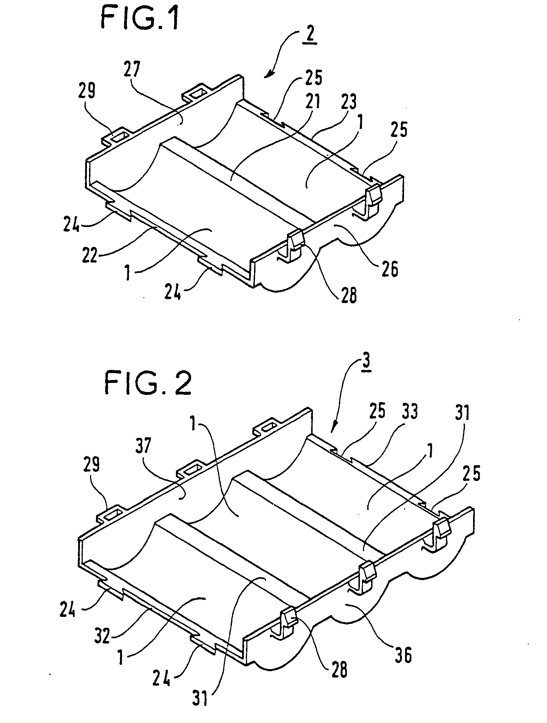

On voit sur la figure 1 un module isolant 2 à deux cavités 1 en portion de cylindre séparées par une nervure intermédiaire 21; ses bords extrêmes 22 et 23 présentent des portions complémentaires 24-25 qui sont susceptibles de coopérer avec le bord d'un autre module juxtaposé; le module 2 comporte deux bases 26 et 27 orthogonales aux génératrices des cavités 1 et munis respectivement de moyens d'accrochage complémentaires 28 et 29 de type ergot-boutonnière.

Sur la figure 2, on voit un module isolant 3 à trois cavités 1; les nervures 31 sont analogues à la nervure 21 du module 1. Les bords extrêmes 32 et 33 présentent des portions en queue d'aronde 24 et 25 et les bases 36 et 37 portent des moyens d'accrochage 28 et 29. On prévoit un ensemble 28-29 en regard de chaque cavité 1.

Le boîtier est fermé à ses extrémités par deux plaquettes isolantes (non représentées) coopérant avec les assemblages 24 et 25 des bords extrêmes des modules 3 et 2. Une cosse métallique de sortie du boîtier ou toute autre variante de type languette, câble ou analogue peut être prévue pour la connexion à des consommateurs.

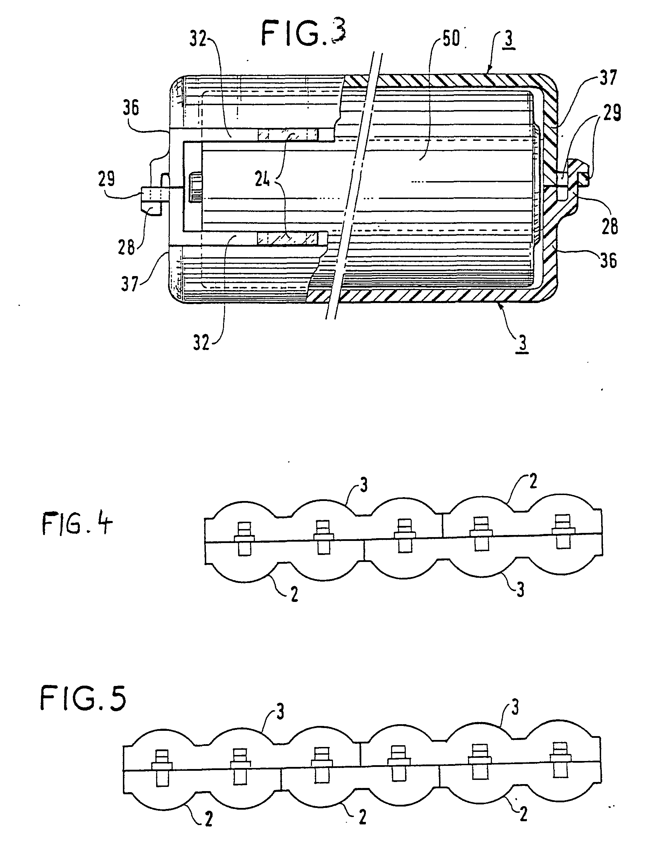

On voit de façon plus précise sur la figure 3 comment les modules 2 ou 3 constituant le demi-boîtier supérieur sont accrochés aux modules 2 ou 3 constituant le demi-boîtier inférieur 3. On a référencé 50 un générateur électrochimique.

Les modules 2 et 3 permettent de réaliser un boîtier comportant un nombre quelconque de générateurs, et ceci, sans qu'il soit nécessaire de mettré en oeuvre des accessoires de solidarisation complexes et spécifiques de ce nombre de générateurs.

La figure 4 montre très schématiquement un boîtier pour cinq générateurs comportant un demi-boîtier supérieur constitué d'un module 3 suivi d'un module 2 et un demi-boîtier inférieur constitué d'un module 2 suivi d'un module 3.

La figure 5 montre un boîtier pour six générateurs comportant un demi-boîtier supérieur constitué de deux modules 3 et un demi-boîtier inférieur constitué de trois modules 2.

Une pluralité d'autres combinaisons est possible bien entendu en choisissant $n > 2$.

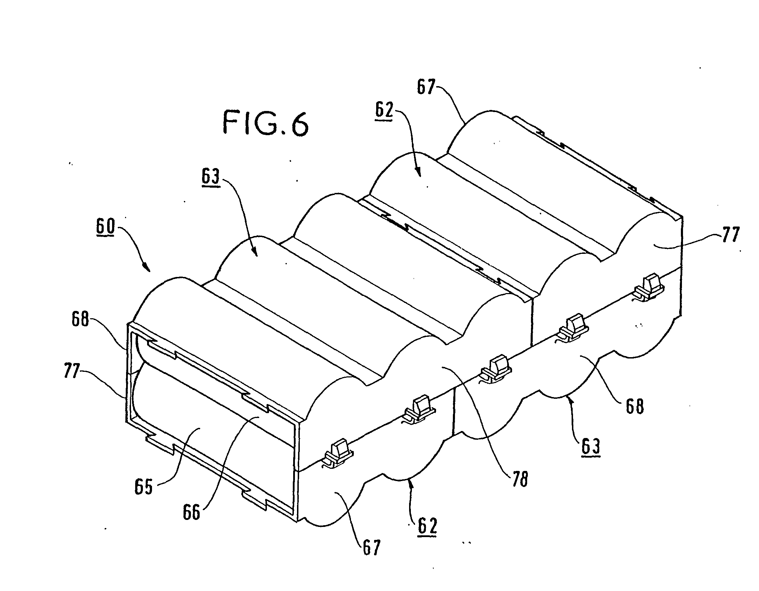

On a représenté sur la figure 6 un boîtier 60 permettant de contenir deux rangées 65 et 66 de générateurs juxtaposés.

Le demi-boîtier supérieur comporte un module 63 à trois éléments suivi d'un module 62 à deux éléments, tandis que le demi-boîtier inférieur comporte un module 62 suivi d'un module 63.

Les modules 62 et 63 sont en tous points identiques aux modules 2 et 3 précédemment décrits, sauf au niveau de leurs bases 67, 68, 77 et 78 dont la hauteur est choisie en fonction de la hauteur de l'empilement des rangées 65 et 66. Les moyens d'accrochage des modules sont inchangés.

Les assemblages ergot-boutonnière et queue-d'aronde peuvent être remplacés par tout mode d'assemblage équivalent.

# Revendications

1. Boîtier pour batterie de générateurs électrochimiques cylindriques disposés parallèlement l'un à l'autre, ce boîtier étant composé de deux demi-boîtiers superposés présentant des cavités (1) complémentaires conformées auxdits générateurs (50), caractérisé en ce que chaque demi-boîtier est composé d'au moins deux modules (2, 3) à n ou n+1 cavités, n étant un nombre entier au moins égal à 2, l'assemblage des deux demi-boîtiers étant tel que les limites entre deux modules sont à des endroits différents dans les deux demi-boîtiers, que chaque module (2, 3) est muni de parties complémentaires d'accrochage (28, 29) sur deux bases orthogonales aux axes des cavités (1) pour la solidarisation des deux demi-boîtiers entre eux, et des parties complémentaires emboîtables (24, 25) avec le module adjacent, et que deux plaquettes sont prévues pour fermer le boîtier aux extrémités des modules extrêmes, en coopérant avec lesdites parties complémentaires emboîtables (24, 25) de ces derniers modules.

2. Boîtier selon la revendication 1, caractérisé par le fait que ledit boîtier est fermé à ses extrémités par deux plaquettes coopérant avec les bords extrêmes des modules extrêmes.

3. Boîtier selon l'une des revendications 1 et 2, caractérisé par le fait que lesdites parties complémentaires d'accrochage sont du type ergot-boutonnière (28, 29).

4. Boîtier selon l'une des revendications précédentes, caractérisé par le fait que lesdites parties complémentaires emboîtables sont du genre assemblage en queue-d'aronde (24, 25).

5. Boîtier selon l'une des revendications précédentes, caractérisé par le fait que lesdites cavités sont séparées par n-1 (ou n) nervures intermédiaires (21, 31) dont l'épaisseur est prévue pour assurer une distance suffisante d'isolement électrique entre deux générateurs voisins.

6. Boîtier selon l'une des revendications précédentes, caractérisé par le fait que la hauteur desdites bases orthogonales (67, 68, 77, 78) est choisie pour que ledit boîtier contienne au moins deux rangées superposées de générateurs.

## Patentansprüche

1. Behälter für eine Batterie zylindrischer elektrochemischer Zellen, die parallel zueinander angeordnet sind, wobei der Behälter aus zwei übereinandergelegten Behälterhälften zusammengesetzt ist, die einander ergänzende, an die Zellen (50) angepaßte Höhlungen (1) besitzen, dadurch gekennzeichnet, daß jede Behälterhälfte aus mindestens zwei Moduln (2, 3) mit n oder n+1 Höhlungen besteht, wobei n eine ganze Zahl von mindestens 2 ist und die Verbindung der beiden Behälterhälften so beschaffen ist, daß sich die Grenzen zwischen zwei Modulen an zwei verschiedenen Stellen in den beiden Behälterhälften befinden, daß jeder Modul (2, 3) mit komplementären Einraststellen (28, 29) an zwei senkrecht zu den Achsen der zwei Höhlungen verlaufenden Basispartien zur Befestigung der beiden Behälterhälften miteinander und der aneinandersteckbaren komplementären Partien (24, 25) mit dem benachbarten Modul versehen ist, und daß zwei Platten zum Schließen des Behälters an den Enden der äußeren Module im Zusammenwirken mit den genannten aneinandersteckbaren komplementären partien (24, 25) dieser letzten Module versehen sind.

2. Behälter nach Anspruch 1, dadurch gekennzeichnet, daß der Behälter an seinen Enden mit zwei Platten verschlossen ist, die mit den äußeren Rändern der äußeren Module zusammenwirken.

3. Behälter nach Anspruch 1 oder 2, dadurch gekennzeichnet, daß die aneinandersteckbaren komplementären Partien nach Art des Druckknopfverschlusses gestaltet sind.

4. Behälter nach einem der vorhergehenden Ansprüche, dadurch gekennzeichnet, daß die aneinandersteckbaren komplementären Partien (24, 25) nach Art des Schwalbenschwanzverschlusses gestaltet sind.

5. Behälter nach einem der vorhergehenden Ansprüche, dadurch gekennzeichnet, daß die Höhlungen durch n-1 (oder n) Zwischenrippen (21, 31) voneinander getrennt sind, deren Dicke für einen ausreichenden elektrischen Isolierabstand zwischen zwei benachbarten Zellen sorgt.

6. Behälter nach einem der vorhergehenden Ansprüche, dadurch gekennzeichnet, daß die Höhe der orthogonalen Basispartien (67, 68, 77, 78) so gewählt ist, daß der Behälter mindestens zwei übereinanderliegende Reihen von Zellen enthält.

## Claims

1. A casing for a battery of cylindrical electrochemical generator cells disposed in parallel to one another, the casing being composed of two superposed half-casings having complementary cavities (1) adapted to said cells (50), characterized in that each half-casing is composed of at least two modules (2, 3) having n or else n+1 cavities, n being an integer of at least value 2, the assembling of the two half-casings being arranged such that the borders between two modules of the two half-casings are located at different places in the two half-casings, that each module (2, 3) is provided with complementary clamping portions (28, 29) disposed on two base portions extending in perpendicular direction relative to the axes of the cavities (1), for fixing the two half-casings with one another and likewise the attachable complementary portions (24, 25) with the adjacent module, and that two plates are provided for closing the casing at the end of the terminal modules in cooperation with said attachable complementary portions (24, 25) of said latter modules.

2. A casing according to claim 1, characterized in that said casing is closed at its end by two plates cooperating with the outer edges of the terminal modules.

3. A casing according to claim 1 or 2, characterized in that said complementary clamping portions are of the press button clamping type (28, 29).

4. A casing according to anyone of the preceding claims, characterized in that said attachable complementary portions are shaped in the dovetail fashion for assembling.

5. A casing according to anyone of the preceding claims, characterized in that said cavities are separated by n-1 (or else n) intermediate ribs (21, 31), whose thickness is adapted to ensure a sufficient electrical insulation between two adjacent cells.

6. A casing according to anyone of the preceding claims, characterized in that the height of said orthogonal base portions (67, 68, 77, 78) is chosen such that said casing is capable of containing at least two superposed rows of cells.

# FIG.1

# FIG. 2

## FIG.3

## FIG.4

## FIG.5

FIG.6